# EUROPEAN PATENT SPECIFICATION

(11) **EP 2 217 002 B1**
(45) Date of publication and mention of the grant of the patent: **03.10.2012**
(21) Application number: 10001368.9
(22) Date of filing: 10.02.2010
(51) Int. Cl.: H04Q 11/04, H04L 12/56

(54) **Method for implementing space division cross-connect and time division cross-connect and a device thereof**
Verfahren zum Implementieren von Raumvielfach-Crossconnect und Zeitvielfach-Crossconnect sowie Vorrichtung dafür
Procédé d'implémentation de répartiteur de division spatiale et répartiteur de division temporelle et dispositif associé

(30) Priority: 10.02.2009 CN 200910078025
(43) Date of publication of application: 11.08.2010
(73) Proprietor: Huawei Technologies Co., Ltd., Longgang District, Shenzhen Guangdong 518129 (CN)
(72) Inventor: Wu, Deliang, Guangdong 518129 (CN); Dong, Juan, Guangdong 518129 (CN)
(74) Representative: Pfenning, Meinig & Partner GbR

(56) References cited:
- EP-A1- 1 585 272
- EP-A2- 0 569 960
- EP-A2- 1 377 112

## Description

### FIELD OF THE INVENTION

The present invention relates to communication field, and in particular, to a method of implementing space division cross-connect and time division cross-connect and a device thereof.

### BACKGROUND

Space division cross-connect and time division cross-connect have been long utilized to dispatch services in the byte-interleaved and frame-fixed network. However, the cross-connect capacity is increased exponentially with network capacity expansion.

The fixed frame structure means that the network frame structure always has n rows and m columns, wherein the structure and length of each frame remain unchanged over time.

The byte interleave is to divide the transmitted information into x time slices so as to increase the bandwidth of a given physical channel. Each time slice transmits a group of information.

Currently, the main method for implementing space division cross-connect and time division cross-connect is as follows:
caching all the time slots input in all the channels of the service in a storage unit called data memory (DM); where there is one storage unit called Configuration memory (CM) for each time slot in each output port, and the CM storage unit is for users to configure dispatching information (dispatching each time slot of a given channel to the time slot);
selecting the needed time slot according to the time slot number; and
selecting the corresponding channel according to the channel number so as to dispatch channels and time slots randomly.

The solution is implemented on the basis of the following principles:

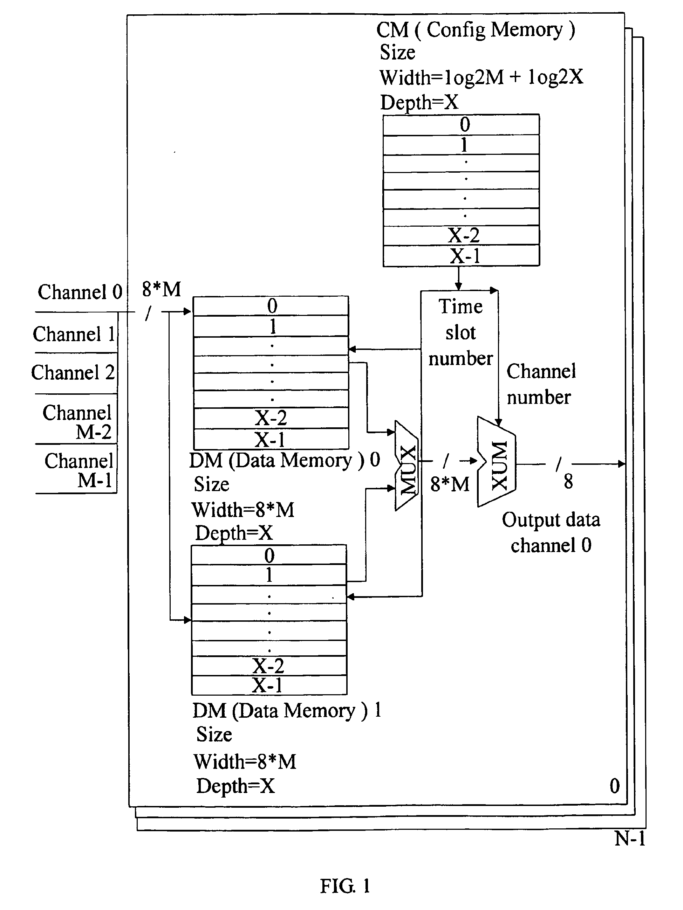

Take an M×N (N ≤ M) cross-connect as an example. M channels are cross-connected into N channels, wherein each channel has X time slots; each channel provides 8-bit parallel data; in order to cross-connect M×N, it needs to realize N of M×1 cross-connect, as shown in FIG. 1.

The input M channels of services are written into DM according to X time slots circular sequence. Each channel has X time slots, so the depth of DM is X. There are totally M channels and each channel provides 8-bit parallel data, so the width of DM is 8*M. After each time slot sequence has been written into the DM, the CM records the information on the input time slot of the input channel from which each output time slot is derived. During the implementation process, the data is read from the DM according to such information configured by the CM. Then, the input channels from which different output time slots are derived are selected from the M channels.

The solution uses DM for time slot dispatching. It is input by sequence and output by user configuration randomly, so it cannot read data when all the X time slots are not written into the DM. Thereby, it must use two DMs for implementation. When all the X time slots are written into DM0, DM1 data is read; when all the X time slots are written into DM1, DM0 data is read.

In addition, another solution similar to the above one is designed to select time sequence first and then select channels. The differences are: The solution improves the DM copy, because the DM copy greatly affects resources. DM will no longer copy data in 1:1 mode, but in P:1 mode. That is, P channels adopt P+1 DMs to cross-connect, and the data is written into one DM each time and the other P DMs read data. As the time when P DM processes the data independently is different, the time when P channels output data is different. Different output channels are delayed at different times by caching, so as to cause each output channel to output the final time slot.

The first solution of the prior technique has the following problems:

DM storage unit needs to cache all time slot information of all the channels and the information storage capacity is large, thereby incurring large resources, power consumption, and high costs through copying.

The second solution of the prior technique has the following problems:

To copy in P:1 mode will cause the time delay of cross-connect to be P times longer than that of the first solution, so this solution is not suitable for fast service dispatch. In addition, the solution is complex, and lacks structure scalability, so it is not suitable for fast development of prior specially-designed integrated circuits.

In the prior art, a device for transmitting data to a plurality of output channel is disclosed in EP 0569960 A2, wherein the device comprises input signal retaining means 1 for retaining pre-determined ones of a plurality of time-slot signals input thereto, identifying means 2 for identifying time-slots signals which are specified by channel setting information to be output, and retention control means 3 for storing the identification information from the identifying means 2 and controlling the input signal retaining means 1 in accordance with the stored identification information such that only the specified time-slot signals are retained by the input signal retaining means.

### SUMMARY

A method for implementing space division cross-connect and time division cross-connect and a device that facilitates resource and cost saving are provided in an embodiment of the present invention.

In order to achieve the purpose, the following technical solutions are provided in an embodiment of the present invention:

A method for implementing space division cross-connect and time division cross-connect characterized in that, the method comprises:
obtaining dispatch information, wherein the dispatch information comprises input channel information of data corresponding to the output time slots of the output channel;
receiving data from a plurality of input channels through at least a multiplexer according to the dispatch information, and transmitting the data into data memories which communicates with the output channels of the data;
storing the data into corresponding storages of each of the data memory, according to the output time slots of the data; and
transmitting the data in the data memories into the corresponding output channels.

A method for implementing space division cross-connect and time division cross-connect is provided in an embodiment of the present invention. It is a cross-connect method for processing channel first and then time slots: obtaining data to be processed from input multi-channel data; inserting the data to be processed into the pre-set channel; selecting data that needs time slots from the pre-set channel; and inserting the selected data that needs time slots into data memory. Therefore, during time slot selection, it is necessary to store less information, which is 1/M (M is the number of channels) of that of the prior technique, so as to save resources, reduce cost and power consumption, decrease the workload for expansion, and reduce dependency on specially-designed integrated circuits.

A device for implementing space division cross-connect and time-slot division cross-connect, configured for transmitting data from a plurality of input channel to an output channel at a plurality of time slots, characterized in that, the device comprises:
a configuration memory, configured to store dispatch information, wherein the dispatch information comprises input channel information of data corresponding to the output time slots of the output channel;
a multiplexer, configured to obtain data from the plurality of input channels according to the information stored in the configuration memory, and transmit the data to storages of a data memory;
the data memory, comprising a plurality of the storages corresponding to a plurality of output time slots, the data memory configured to receive the data from the multiplexer and store the data in the storages respectively according to the output time slots of the data, and further configured to output the data in the corresponding storage at each output time slot.

A device for implementing space division cross-connect and time division cross-connect is provided in an embodiment of the present invention. The device uses a configuration memory to control the multiplexer to perform multiplexing during the time slots cross and store the selected data into the data memory by adopting a cross-connect method for processing the channel first and then the time slot. Therefore, during time slot selection, it needs to store less information which is 1/M (M is the number of channels) of that of the prior technique, so as to save resources, reduce cost and power consumption, decrease the workload for expansion, and reduce dependency on specially-designed integrated circuits.

### BRIEF DESCRIPTION OF THE DRAWINGS

FIG. 1 shows a principle schematic of a method for implementing space division cross-connect and time division cross-connect by the prior technique;
FIG.2 shows a logical flowchart of a method for implementing space division cross-connect and time division cross-connect in an embodiment of the present invention;
FIG.3 shows a principle schematic of a method for implementing space division cross-connect and time division cross-connect in another embodiment of the present invention;
FIG.4 shows a structure of a device for implementing space division cross-connect and time division cross-connect in an embodiment of the present invention;
FIG.5 shows a structure of a device for implementing space division cross-connect and time division cross-connect in another embodiment of the present invention; and
FIG.6 shows a structure of a device for implementing space division cross-connect and time division cross-connect in one another embodiment of the present invention.

### DETAILED DESCRIPTION

A method for implementing space division cross-connect and time division cross-connect and a device thereof with resources saved and cost and consumption lowered are provided in an embodiment of the present invention.

The detailed description of an embodiment of the present invention is made as follows in combination with the drawings.

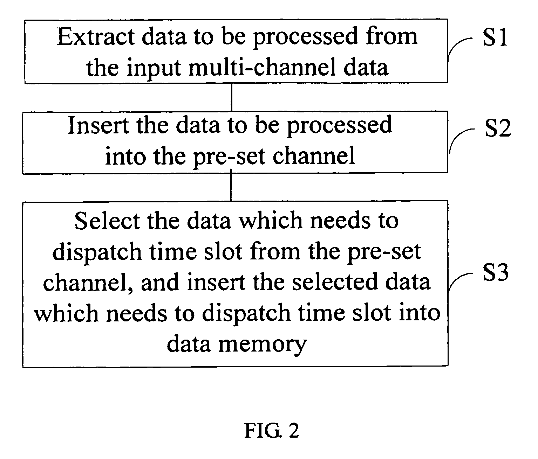

As shown in FIG.2, a method for implementing space division cross-connect and time division cross-connect is provided in an embodiment of the present invention. Logically, the method includes:
S1. Obtaining data to be processed from the input multi-channel data.
S2. Inserting the data to be processed into the pre-set channel.
S3. Selecting data that needs time division cross-connec from the pre-set channel, and inserting the selected data that needs time division cross-connec into data memory.

It is easy to understand that S1 to S3 can be repeated in parallel to do cross processing on multiple data at the same time.

The steps are the logical flowchart steps of the method, as circuit, actually as the parallel process of the circuit.

A method for implementing space division cross-connect and time division cross-connect is provided in an embodiment of the present invention. In the embodiment of the invention, the space division and time division cross-connect is performed through processing the channel division first and then the time slot division: obtaining data to be processed from one of the input multi-channel data; inserting the data to be processed into the pre-set channel; selecting data that needs time slots from the pre-set channel; and inserting the selected data that needs time slots into data memory. Since the channel switch is performed during the process of selecting data according to information stored in CM (configuration memory), there is no need to store channel information in DM, so as to save resources, reduce cost and power consumption, decrease the workload for expansion, and reduce dependency on integrated circuit with special function.

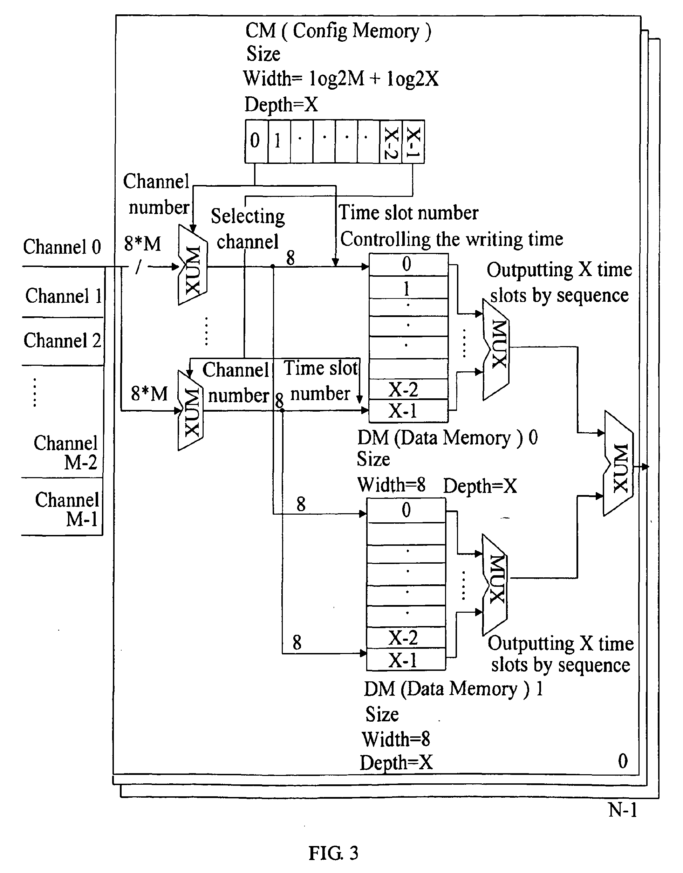

A method for implementing space division cross-connect and time division cross-connect is provided in another embodiment of the present invention, wherein the implementing principle is shown as FIG.3. Take a M×N (N ≤ M) cross as an example. In this embodiment, data in M input channels are cross-transmitted into N output channels, wherein each of the channels has X time slots. Further, in the embodiment of the invention, each channel performs parallel data processing by 8-bit, in this embodiment of the invention, the "M" and "N" are all natural numbers.

The embodiments of the present invention process the channel cross-connect first and then the time division cross connect. Therefore, during time slot selection, it needs to store less information.

In the embodiment of the invention, each of the X time slots of one output channel has a configuration memory for users to dispatch time slots to the given time slot as required. During service dispatching in an embodiment of the present invention, the service information stored by all the X time slots can be executed concurrently or in turn. In this embodiment, each time slot corresponds to a multiplexer (MUX). The MUX is configured to receive data from channels which has data configured to be transmitted in the corresponding time slot, and transmit the data into a time slot sequence stored in a data memory. In the embodiment of the invention, without storing the channel information, each time slot only needs 8-bit storage units rather than 8 x M bit units in the prior technique.

If the time slot sequence of a data memory is full, another data memory is switched to for continuous storage. Meanwhile, the data previously stored in the full data memory can be output by sequence, wherein the output data is the data after dispatching.

The method for implementing space division cross-connect and time division cross-connect provided in the present invention is a cross-connect method for processing first channels division and then time slot division. According to the information stored in the configuration memory, the data memory chooses input channel corresponding to each time slot, and store data from the input channels in corresponding storage for each time slot, wherein each time slot corresponds to the circuit parallel execution. After a time slot cycle ends, the data cached in the data memory is output by sequence. Therefore, in the invention, with help of the during time slot selection, it needs to store less information which is 1/M (M is the number of channels) of that of the prior technique, so as to save resources, reduce cost and power consumption, decrease the workload for expansion, and reduce dependency on specially-designed integrated circuits.

Specifically, embodiments 1 and 2 are described as follows.

### Embodiment 1

A method for implementing space division cross-connect and time division cross-connect is provided in embodiment 1 of the present invention, described by taking the parallel dispatch of multi-bit services as an example, specifically, an example of implementing non-blocking cross-connect of 128×128 channels. Each channel has 16 time slots and it is parallel processing by 8-bit.

This embodiment firstly carries out 128×1 cross, and then instantiates 128 parts, specifically as follows:
Firstly, a multiplexer (MUX) for selecting 1 from 128 is designed, and then instantiated into eight parts to generate a multiplexer of a time slot, wherein there are 16 time slots that need 16 instantiation for each time slot;
secondly, a configuration memory is designed with 16 time slots, wherein the dispatch information stored in each time slot comprises input channels and input time slots where the output time slot is derived from. For the embodiment 1, 128 channels need 7-bit information encoding; 16 time slots need 4-bit information encoding, that is, each time slot needs 11-bit information encoding; for one output channel, the 16*11 bit register needs to be as a configuration memory. User can respectively configure the configuration memory information of each time slot by sequence. After the configuration of the configuration memory, the state turns to a working state, wherein the configuration information corresponding to each time slot controls the channel selection of each time slot and the writing time of the data memory at the same time; and
finally, a data memory is designed, in which each time slot needs 8 bits. Then, 16 time slots need 16*8-bit to register as the data memory, where each 8-bit is a group and corresponds to a time slot. The operation modes of the data memory corresponding to each time slot are the same, described as follows.

The data memory inputs the data from the multiplexer and uses the time slot number to control the writing time. For example, if the data memory of time slot 0 requires data of time slot 8 from channel 3, the multiplexer selects the data of channel 3 from 128 channels, and then controls writing of the data into the data memory at time slot 8 by the time slot counter. Through X time slots, the information stored in the data memory corresponding to all the X time slots is updated and can be output directly by sequence, which is the service user needs to dispatch.

A method for implementing space division cross-connect and time division cross-connect is provided in an embodiment of the present invention. It is a cross-connect method for processing the channel first and then the time slot. According to the configuration memory, each output time slot of each channel firstly selects the channel which the time slot needs to dispatch from the input M channels, selects the time slot that needs to be dispatched from the channel, and then stores the time slot which is finally input into the data memory, wherein each time slot corresponds to the circuit parallel execution. After a time slot cycle ends, the data cached in the data memory is output by sequence. Therefore, during time slot selection, it needs to store less information which is 1/M (M is the number of channels) of that of the prior technique, so as to save resources, reduce cost and power consumption, decrease the workload for expansion, and reduce dependency on specially-designed integrated circuits.

### Embodiment 2

A method for implementing space division cross-connect and time division cross-connect is provided in embodiment 2 of the present invention, described by taking the independent dispatch of single-bit service as an example, specifically, an example of implementing non-blocking cross-connect of 128×128 channels. Each channel has 16 time slots and the 8-bit parallel data is input bit by bit.

This embodiment firstly carries out 128×1 cross-connect, including three parts.
Firstly, a multiplexer (MUX) is designed to select 1 from 128 and instantiated into eight parts to generate a multiplexer of a time slot, wherein there are 16 time slots that need 16 instantiation for each time slot. The selective terminals of eight multiplexers corresponding to each time slot are not derived from the same control information, but from eight different pieces of control information.
Secondly, a configuration memory is designed to hold 16 time slots, wherein the dispatch information stored by each time slot comprises the input channel and the input time slot where the output time slot is derived from. For the embodiment 2, 128 channels need 7-bit information encoding; 16 time slots need 4-bit information encoding, that is, each time slot needs 11-bit information encoding; for one output channel, the 16*11 bit register needs to be set up as a configuration memory. Users can respectively configure the configuration memory information of each time slot by sequence. After the configuration of the configuration memory, the working status comes, wherein the configuration information corresponding to each time slot controls the channel selection of each time slot and the writing time of the data memory at the same time.
Finally, an 8-bit data memory is designed for each time slot. Specifically, 16 time slots need 16*8-bit register as the data memory, wherein each 8-bit is a group and corresponds to a time slot. The operation modes of the data memory corresponding to each time slot are the same, described as follows.

The data memory inputs the data from the multiplexer and adopts the time slot number to control the writing time. For example, if the data memory of time slot 0 requires dispatching the data of time slot 8 from channel 3, the multiplexer selects the data of channel 3 from 128 channels, and then controls writing data into the data memory at time slot 8 by the time slot counter. The writing time of 8-bit storage unit corresponding to each time slot is not derived from the same control information, but from different control signals.

Through X time slots, the information stored in the data memory corresponding to all the X time slots is updated and can be output directly by sequence, namely, the service that the user needs to dispatch.

A method for implementing space division cross-connect and time division cross-connect is provided in embodiment 2 of the present invention. It is a cross-connect method for processing the channel first and then the time slot. According to the configuration memory, each output time slot of each channel firstly selects the channel which the time slot needs to dispatch from the input M channels, selects the time slot that needs to be dispatched from the channel, and then stores the time slot which is finally input into the data memory, wherein each time slot corresponds to the circuit parallel execution. After a time slot cycle ends, the data cached in the data memory is output by sequence. Therefore, during time slot selection, it needs to store less information which is 1/M (M is the number of channels) of that of the prior technique, so as to save resources, reduce cost and power consumption, decrease the workload for expansion, and reduce dependency on specially-designed integrated circuits.

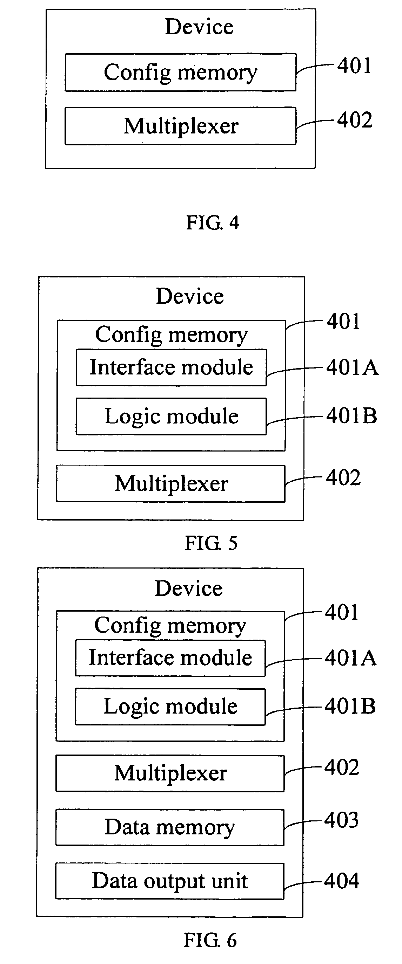

As shown in FIG.4, a device for implementing space division cross-connect and time division cross-connect is provided in an embodiment of the present invention. The device comprises:
a configuration memory 401, adapted to store dispatch information, input channel information for identifying which input channel has data to be output at each time slot, and to control a multiplexer 402 to select the channel first and then the time slot, aiming at the input multi-channel data; and
the multiplexer 402, adapted to obtain data from the input channels according to the information stored in the configuration memory 401, transmit the data into storage units in the data memory, wherein storage units of the data memory is configured corresponding to preset output time slots.

In the embodiment of the present invention, the data from the multi-input-channel is transmitted to a corresponding storage unit in the data memory by the multiplexer 402. Because the transmission of the data is processed according to information of output channel stored in the configuration memory 401, there is no need for the data memory to store the information of the input channels of the data, and thus, the resource is saved.

As shown in FIG.5, the configuration memory 401 according to the embodiment of the present invention comprises:
an interface module 401 A, adapted to store the dispatch information and the input channel information; and
a logic module 401 B, adapted to concurrently access all the dispatch information.

A device for implementing space division cross-connect and time division cross-connect is provided in another embodiment of the present invention. On the basis of foregoing embodiments, as shown in FIG.6, the device further comprises:
a data memory 403, adapted to receive data from the multiplexer and save the data in corresponding storage units according to the output time slots of the data, and
a data output unit 404, adapted to output the data in the data memory at each time slot.

A device for implementing space division cross-connect and time division cross-connect is provided in an embodiment of the present invention. It uses the configuration memory 401 to control the multiplexer 402 to perform channel cross-connect dispatch first and then time slots cross-connect, the data memory 403 to store the dispatched data, and the data output unit 404 to output the data. Therefore, during time slot selection, it needs to store less information which is 1/M (M is the number of channels) of that of the prior technique, so as to save resources, reduce cost and power consumption, decrease the workload for expansion, and reduce dependency on specially-designed integrated circuits.

Detailed above are a method for implementing space division cross-connect and time division cross-connect and a device thereof provided in an embodiment of the present invention. Although the invention is described through some exemplary embodiments, the invention is not limited to such embodiments. Those skilled in the art can make various modifications and variations to the invention without departing from the scope of the invention. The invention is intended to cover the modifications and variations provided that they fall in the scope of protection defined by the following claims or their equivalents.

## Claims

1. A device for implementing space division cross-connect and time-slot division cross-connect, configured for transmitting data from a plurality of input channels to an output channel at a plurality of time slots, **characterized in that**, the device comprises:
a configuration memory (401), configured to store dispatch information, wherein the dispatch information comprises input channel information of data corresponding to the output time slots of the output channel;
a multiplexer (402), configured to obtain data from the plurality of input channels according to the information stored in the configuration memory, and transmit the data to storage units of a data memory;
the data memory (403), comprising a plurality of the storage units corresponding to a plurality of output time slots, the data memory configured to receive the data from the multiplexer and store the data in the storage units respectively according to the output time slots of the data, and further configured to output the data in the corresponding storage unit at each output time slot.

2. The device according to claim 1, **characterized in that**, the device further comprises a standby data memory configured to store the data when the data memory is full.

3. The device according to claim 2, **characterized in that**, the device further comprises an output multiplexer, configured to selectively receive data from the data memory and the standby data memory and transmit the data to an output channel.

4. The device according to claim 3, **characterized in that** the device further comprises a time-slot multiplexer, configured to select and transmit the data in the data memory to the output channel at each time slot, and a standby time-slot multiplexer, configured to select and transmit the data in the standby data memory to the output channel at each time slot.

5. The device according to claim 1, **characterized in that** the device further comprises an output channel, configured to receive the output data from the data memory and transmit the data out at each time slot.

6. The device according to claim 4, **characterized in that** the device further comprises a time-slot multiplexer, configured to select and transmit the data in the data memory to the output channel at each time slot.

7. The device according to claim 1, **characterized in that** the dispatch information further comprises input time slots information of data corresponding to the output time slots of the output channel.

8. A system for implementing space division cross-connect and time-slot division cross-connect, **characterized in that** the system comprises a plurality of device according to claims 1 to 7, each of the devices corresponds to an output channel for transmitting data from a plurality of input channel to the plurality of output channels.

9. A method for implementing space division cross-connect and time division cross-connect, **characterized in that**, the method comprises:
obtaining dispatch information, wherein the dispatch information comprises input channel information of data corresponding to the output time slots of the output channel;
receiving data from a plurality of input channels through at least a multiplexer according to the dispatch information, and transmitting the data into data memories which communicates with the output channels of the data;
storing the data into corresponding storage units of each of the data memory, according to the output time slots of the data; and
transmitting the data in the data memories into the corresponding output channels.

10. The method according to claim 9 **characterized in that** the step of receiving data from a plurality of input channels through at least a multiplexer, and transmitting the data into data memories which communicate with the output channels of the data comprises:
if the data memory corresponding to one of output channels is full, transmitting the data to a standby data memory of the same output channel.

11. The method according to claim 9, **characterized in that** the dispatch information further comprises input time slots information of data corresponding to the output time slots of the output channel.

12. The method according to claim 11, **characterized in that** the step of receiving data from a plurality of input channels through at least a multiplexer according to the dispatch information comprises:
selecting an input channel which has data to be transmitted as an output time slot according to the input channel information; and
obtaining the data from the input channel which has data to be transmitted as the output time slot according to the input time slot information.

## Patentansprüche

1. Einrichtung zum Implementieren von Raumvielfach-Crossconnect und Zeitschlitzvielfach-Crossconnect, die dafür ausgelegt ist, Daten von mehreren Eingangskanälen in mehreren Zeitschlitzen zu einem Ausgangskanal zu übertragen, **dadurch gekennzeichnet, dass** die Einrichtung Folgendes umfasst:
einen Konfigurationsspeicher (401), der dafür ausgelegt ist, Abfertigungsinformationen zu speichern, wobei die Abfertigungsinformationen Eingangskanalinformationen von Daten umfassen, die den Ausgangszeitschlitzen des Ausgangskanals entsprechen;
einen Multiplexer (402), der dafür ausgelegt ist, gemäß den in dem Konfigurationsspeicher gespeicherten Informationen Daten von den mehreren Eingangskanälen zu erhalten und die Daten zu Speichereinheiten eines Datenspeichers zu übertragen;
den Datenspeicher (403), der mehrere Speichereinheiten umfasst, die mehreren Ausgangszeitschlitzen entsprechen, wobei der Datenspeicher dafür ausgelegt ist, die Daten von dem Multiplexer zu empfangen und die Daten in den Speichereinheiten jeweils gemäß den Ausgangszeitschlitzen der Daten zu speichern, und ferner dafür ausgelegt ist, die Daten in der entsprechenden Speichereinheit in jedem Ausgangszeitschlitz auszugeben.

2. Einrichtung nach Anspruch 1, **dadurch gekennzeichnet, dass** die Einrichtung ferner einen Standby-Datenspeicher umfasst, der dafür ausgelegt ist, die Daten zu speichern, wenn der Datenspeicher voll ist.

3. Einrichtung nach Anspruch 2, **dadurch gekennzeichnet, dass** die Einrichtung ferner einen Ausgangsmultiplexer umfasst, der dafür ausgelegt ist, selektiv Daten von dem Datenspeicher und dem Standby-Datenspeicher zu empfangen und die Daten zu einem Ausgangskanal zu übertragen.

4. Einrichtung nach Anspruch 3, **dadurch gekennzeichnet, dass** die Einrichtung ferner Folgendes umfasst: einen Zeitschlitzmultiplexer, der dafür ausgelegt ist, die Daten in dem Datenspeicher auszuwählen und in jedem Zeitschlitz zu dem Ausgangskanal zu übertragen, und einen Standby-Zeitschlitzmultiplexer, der dafür ausgelegt ist, die Daten in dem Standby-Datenspeicher auszuwählen und in jedem Zeitschlitz zu dem Ausgangskanal zu übertragen.

5. Einrichtung nach Anspruch 1, **dadurch gekennzeichnet, dass** die Einrichtung ferner einen Ausgangskanal umfasst, der dafür ausgelegt ist, die Ausgangsdaten von dem Datenspeicher zu empfangen und die Daten in jedem Zeitschlitz heraus zu übertragen.

6. Einrichtung nach Anspruch 4, **dadurch gekennzeichnet, dass** die Einrichtung ferner einen Zeitschlitzmultiplexer umfasst, der dafür ausgelegt ist, die Daten in dem Datenspeicher auszuwählen und in jedem Zeitschlitz zu dem Ausgangskanal zu übertragen.

7. Einrichtung nach Anspruch 1, **dadurch gekennzeichnet, dass** die Abfertigungsinformationen ferner Eingangszeitschlitzinformationen von Daten umfassen, die den Ausgangszeitschlitzen des Ausgangskanals entsprechen.

8. System zum Implementieren von Raumvielfach-Crossconnect und Zeitschlitzvielfach-Crossconnect, **dadurch gekennzeichnet, dass** das System mehrere Einrichtungen nach den Ansprüchen 1 bis 7 umfasst, wobei jede der Einrichtungen einem Ausgangskanal zum Übertragen von Daten von mehreren Eingangskanälen zu den mehreren Ausgangskanälen entspricht.

9. Verfahren zum Implementieren von Raumvielfach-Crossconnect und Zeitvielfach-Crossconnect, **dadurch gekennzeichnet, dass** das Verfahren Folgendes umfasst:
Erhalten von Abfertigungsinformationen, wobei die Abfertigungsinformationen Eingangskanalinformationen von Daten umfassen, die den Ausgangszeitschlitzen des Ausgangskanals entsprechen;
Empfangen von Daten von mehreren Eingangskanälen durch mindestens einen Multiplexer gemäß den Abfertigungsinformationen und Übertragen der Daten in Datenspeicher, die mit den Ausgangskanälen der Daten kommunizieren;
Speichern der Daten in entsprechende Speichereinheiten jedes Datenspeichers gemäß den Ausgangszeitschlitzen der Daten; und
Übertragen der Daten in den Datenspeichern in die entsprechenden Ausgangskanäle.

10. Verfahren nach Anspruch 9, **dadurch gekennzeichnet, dass** der Schritt des Empfangens von Daten von mehreren Eingangskanälen durch mindestens einen Multiplexer und des Übertragens der Daten in Datenspeicher, die mit den Ausgangskanälen der Daten kommunizieren, Folgendes umfasst:
wenn der Datenspeicher, der einem der Ausgangskanäle entspricht, voll ist, Übertragen der Daten zu einem Standby-Datenspeicher desselben Ausgangskanals.

11. Verfahren nach Anspruch 9, **dadurch gekennzeichnet, dass** die Abfertigungsinformationen ferner Eingangszeitschlitzinformationen von Daten umfassen, die den Ausgangszeitschlitzen des Ausgangskanals entsprechen.

12. Verfahren nach Anspruch 11, **dadurch gekennzeichnet, dass** der Schritt des Empfangens von Daten von mehreren Eingangskanälen durch mindestens einen Multiplexer gemäß den Abfertigungsinformationen Folgendes umfasst:
Auswählen eines Eingangskanals, der zu übertragende Daten aufweist, als einen Ausgangszeitschlitz gemäß den Eingangskanalinformationen; und
Erhalten der Daten von dem Eingangskanal, der zu übertragende Daten aufweist, als den Ausgangszeitschlitz gemäß den Eingangszeitschlitzinformationen.

## Revendications

1. Dispositif de mise en oeuvre de répartiteur en division spatiale et de répartiteur en division en tranches de temps, configuré pour transmettre des données depuis une pluralité de canaux d'entrée vers un canal de sortie au niveau d'une pluralité de tranches de temps, **caractérisé en ce que** le dispositif comprend :
une mémoire de configuration (401), configurée pour mémoriser des informations d'expédition, les informations d'expédition comprenant des informations de canal d'entrée de données correspondant aux tranches de temps de sortie du canal de sortie ;
un multiplexeur (402), configuré pour obtenir des données depuis la pluralité de canaux d'entrée en fonction des informations mémorisées dans la mémoire de configuration, et transmettre les données à des unités de mémorisation d'une mémoire de données ;
la mémoire de données (403), comprenant une pluralité des unités de mémorisation correspondant à une pluralité de tranches de temps de sortie, la mémoire de données étant configurée pour recevoir les données depuis le multiplexeur et mémoriser les données dans les unités de mémorisation respectivement en fonction des tranches de temps de sortie des données, et étant configurée en outre pour produire en sortie les données dans l'unité de mémorisation correspondante au niveau de chaque tranche de temps de sortie.

2. Dispositif selon la revendication 1, **caractérisé en ce que** le dispositif comprend en outre une mémoire de données de secours configurée pour mémoriser les données quand la mémoire de données est pleine.

3. Dispositif selon la revendication 2, **caractérisé en ce que** le dispositif comprend en outre un multiplexeur de sortie, configuré pour recevoir sélectivement des données depuis la mémoire de données et la mémoire de données de secours et transmettre les données à un canal de sortie.

4. Dispositif selon la revendication 3, **caractérisé en ce que** le dispositif comprend en outre un multiplexeur de tranches de temps, configuré pour sélectionner et transmettre les données dans la mémoire de données au canal de sortie au niveau de chaque tranche de temps, et un multiplexeur de tranches de temps de secours, configuré pour sélectionner et transmettre les données dans la mémoire de données de secours au canal de sortie au niveau de chaque tranche de temps.

5. Dispositif selon la revendication 1, **caractérisé en ce que** le dispositif comprend en outre un canal de sortie, configuré pour recevoir les données de sortie depuis la mémoire de données et transmettre les données en sortie au niveau de chaque tranche de temps.

6. Dispositif selon la revendication 4, **caractérisé en ce que** le dispositif comprend en outre un multiplexeur de tranches de temps, configuré pour sélectionner et transmettre les données dans la mémoire de données au canal de sortie au niveau de chaque tranche de temps.

7. Dispositif selon la revendication 1, **caractérisé en ce que** les informations d'expédition comprennent en outre des informations de tranches de temps d'entrée des données correspondant aux tranches de temps de sortie du canal de sortie.

8. Système de mise en oeuvre de répartiteur en division spatiale et de répartiteur en division en tranches de temps, **caractérisé en ce que** le système comprend une pluralité de dispositifs selon les revendications 1 à 7, chacun des dispositifs correspondant à un canal de sortie pour transmettre des données depuis une pluralité de canaux d'entrée vers la pluralité de canaux de sortie.

9. Procédé de mise en oeuvre de répartiteur en division spatiale et de répartiteur en division temporelle, **caractérisé en ce que** le procédé comprend :
l'obtention d'informations d'expédition, les informations d'expédition comprenant des informations de canal d'entrée de données correspondant aux tranches de temps de sortie du canal de sortie ;
la réception de données depuis une pluralité de canaux d'entrée par le biais d'au moins un multiplexeur en fonction des informations d'expédition, et la transmission des données dans des mémoires de données qui communiquent avec les canaux de sortie des données ;
la mémorisation des données dans des unités de mémorisation correspondantes de chacune des mémoires de données, en fonction des tranches de temps de sortie des données ; et
la transmission des données dans les mémoires de données dans les canaux de sortie correspondants.

10. Procédé selon la revendication 9, **caractérisé en ce que** l'étape de réception des données depuis une pluralité de canaux d'entrée par le biais d'au moins un multiplexeur, et l'étape de transmission des données dans des mémoires de données qui communiquent avec les canaux de sortie des données comprennent :
si la mémoire de données correspondant à l'un des canaux de sortie est pleine, la transmission des données à une mémoire de données de secours du même canal de sortie.

11. Procédé selon la revendication 9, **caractérisé en ce que** les informations d'expédition comprennent en outre des informations de tranches de temps d'entrée des données correspondant aux tranches de temps de sortie du canal de sortie.

12. Procédé selon la revendication 11, **caractérisé en ce que** l'étape de réception de données depuis une pluralité de canaux d'entrée par le biais d'au moins un multiplexeur en fonction des informations d'expédition comprend :
la sélection d'un canal d'entrée ayant des données à transmettre comme tranche de temps de sortie en fonction des informations de canal de sortie ; et
l'obtention des données provenant du canal d'entrée ayant des données à transmettre comme tranche de temps de sortie en fonction des informations de tranches de temps d'entrée.
